# EUROPEAN PATENT APPLICATION

(11) **EP 4 647 232 A2**
(43) Date of publication of application: **12.11.2025**
(21) Application number: 25174271.4
(22) Date of filing: 05.05.2025
(51) Int. Cl.: B29C 45/17

(54) **SAFETY STRAP FOR INJECTION MOLDS**

(30) Priority: 06.05.2024 US 202418655489
(71) Applicant: Progressive Components International Corporation, Wauconda, IL 60084 (US)
(72) Inventor: Starkey, Glenn, Wauconda, Illinois, 60084 (US); Fattori, James, Trevose, Pennsylvania, 19053 (US)
(74) Representative: KBN IP Patentanwälte Partnerschaft mbB

(57) **Abstract**

A mold safety strap (20, 120) and method of use for securing two mold halves (24, 26) together. The safety strap includes an elongated strap body including two side walls extending between a first end and a second end, and an elongated central opening disposed between the two side walls. The first end is connectable to a first of the mold halves and the second end is connectable to a second of the mold halves. An intended break point (50, 150) is formed in a least one of the two side walls. The break point is frangible at a predetermined breaking strain value. The safety strap is sacrificial and intended to break if left on the mold during use, and at a straining force less than required to shear off the attachment bolts.

## Description

### BACKGROUND OF THE INVENTION

This invention relates generally to handling and transport of molds (e.g., for injection molding, die cast dies, stamping dies, blow molds) and, more particularly, to mold straps that are used to secure mold halves together for mold transportation and storage.

Mold straps are known for use in holding mold halves together during transportation and storage. The mold strap is to prevent a mold from accidentally coming apart during transportation and handling to protect a user handling the mold. Mold straps are desirably located on an operator side of the mold, so that a user remembers they are there and/or so that it is positioned for a user to see, and detach from holding prior to cycling the mold. However, it is common that mold operators forget the mold strap is still on the mold when the first molding cycle occurs.

Desirably a forgotten mold strap setup breaks during operation before causing the mold damage. Plastic mold straps may break easily but have other known issues over metal mold straps, such as not having comparable strength. Typically the failure of a metal mold strap installation is that one of the bolts holding the strap to the mold halves shears. That sheared bolt is difficult to remove, and cannot be machined out or removed while the mold is in the press. The result is that after the mold is then run and produces parts, and then when it is time for the mold to be removed, the strap is often not reinstalled, which results in a safety issue as the mold halves are not secured together.

There is thus a continuing need for improved mold straps for injection mold halves.

### SUMMARY OF THE INVENTION

A general object of the invention is to provide an improved mold strap. Unlike other mold straps, the safety strap of this invention has an engineered break point to avoid bolt shearing if/when left on the mold in a molding machine or press. The broken strap is rather apparent and attention getting, and thus is a 'failure evident' design. A plant manager would identify this, order a replacement (or retrieve from a drawer of stock units), and then simply bolt on the replacement strap. Now, when the mold production is finished, the strap and the bolts are all intact and the mold is safely removed from the molding machine.

The general object of the invention can be attained, at least in part, through a mold safety strap for securing two mold halves together. The mold safety strap includes a strap body having a first end connectable to a first of the mold halves and a second end connectable to a second of the mold halves. A fastener, for example a threaded bolt, is at each of the first and second ends of the strap body, to secure the mold strap to and between the mold halves (over the parting line). The strap body includes a frangible section disposed between the first end and the second end. The frangible section has a break point value of less the fasteners so that the mold safety strap breaks before the fasteners shear off the mold halves.

Each of the first end and the second end of the strap body includes a shoulder for receiving a fastener head. The shoulder is secured between the fastener head and the mold surface.

The frangible section desirably includes less material (e.g., less material thickness) than a remainder of the strap body sides. In embodiments, the frangible section includes one or more recesses in a portion of the strap body extending between the first and second ends.

In embodiments, the strap body has an oval or stadium shape with a central opening, desirably of the same shape. The strap body includes two opposing sides extending between the first and second end and on opposite sides of the central opening. Each of the sides desirably includes the frangible section. The frangible section can be formed by a recess or other opening (or material reduction) in the sides. In embodiments, the recess extends from a first side surface. A second recess or an opening can be included in a second side surface.

The invention further includes a mold safety strap including an elongated strap body including two side walls extending between a first end and a second end, and an elongated central opening disposed between the two side walls. The first end is again connectable to a first of the mold halves and the second end is connectable to a second of the mold halves. A break point is formed in a least one of the two side walls, wherein the break point is frangible at a predetermined breaking strain value. Fasteners are again desirably used for connection to the mold. The predetermined breaking strain value is preferably less than a fastener breaking strain value, such that the safety strap breaks apart before one or both of the fasteners shear off the mold.

The break point includes a section of reduced material thickness. The break point again can be one or more recesses and/or openings in each of the two side walls.

Other objects and advantages will be apparent to those skilled in the art from the following detailed description taken in conjunction with the appended claims and drawings.

### BRIEF DESCRIPTION OF THE DRAWINGS

FIG. 1A shows a mold safety strap according to one embodiment of this invention.
FIG. 1 B shows the mold strap of FIG. 1A in a broken configuration.
FIG. 2 shows a mold safety strap according to one embodiment of this invention.
FIG. 3 shows a mold safety strap according to one embodiment of this invention.
FIGS. 4 and 5 show a mold safety strap according to one embodiment of this invention.
FIGS. 6 and 7 show a mold safety strap according to one embodiment of this invention.
FIG. 8 shows a mold safety strap according to one embodiment of this invention.
FIGS. 9 and 10 show a mold safety strap according to one embodiment of this invention.

### DETAILED DESCRIPTION OF THE INVENTION

The present invention provides a mold safety strap that secures mold parting lines for transportation, mold setting, and storage. A breakaway feature in, for example, a center of the safety strap is engineered to break, at least slightly before the bolts would shear. If unintentionally left on the mold in the press, the safety strap will be obvious to the operator that it is broken and can easily be replaced. Other mold straps shear the bolts, which cannot be removed with the mold in the press, creating an unsafe condition when the mold is later removed from the machine. The safety straps of this invention can replace other commercial mold straps, and are preferably formed of metal that is powder coated in the OSHA caution yellow color.

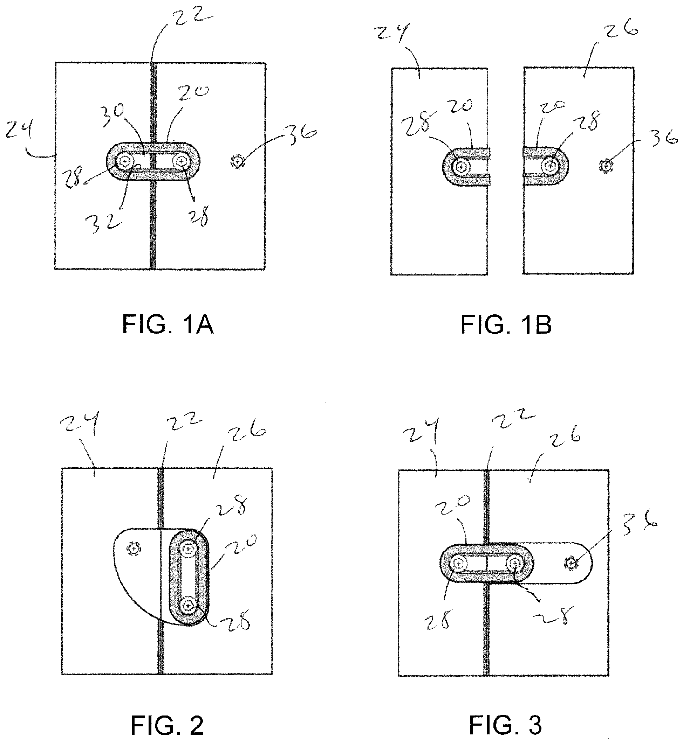

FIG. 1A shows a representative use of a safety strap 20 according to one embodiment of the invention. The safety strap extends across the parting line 22 of two mold halves 24 and 26. Two fasteners, shown as bolts 28 extend through a central opening 30 of the safety strap 20, and the bolt heads tighten down on an interior shelf or shoulder 32 to secure the safety strap 20 to the mold halves 24 and 26 to keep them from separating. Mold half 26 includes a further threaded opening 36 so that the safety strap can moved to a storage position with both bolts 28 connected to mold half 26. FIG. 2 shows a similar embodiment in a storage position, but with a "swing mount." FIG. 3 shows a similar embodiment with a "sliding mount."

FIG. 1B shows the safety strap 20 broken into two pieces after the mold halves 24 and 26 were operated in a mold machine without removing the safety strap 20. The remaining strap halves will be noticeable to the mold operator during continued use, and can be replaced by a new safety strap 20 (e.g., into the storage position) when noticed, without removing the mold from the machine.

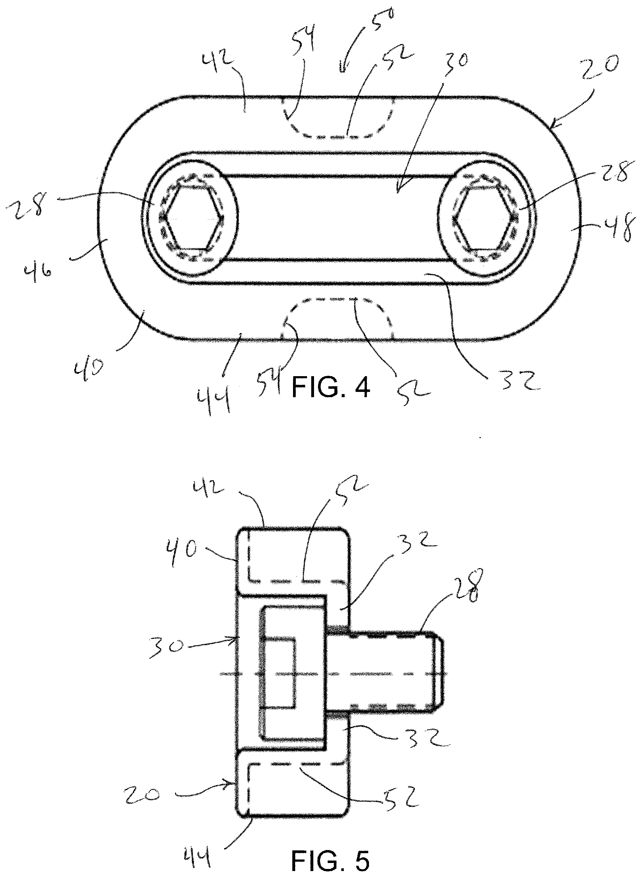

FIGS. 4 and 5 show a safety strap 20 according to one embodiment of this invention in combination with two bolts 28. The safety strap 20 includes an oval or stadium shaped strap body 40 surrounding the similarly shaped central opening 30. The strap body 40 includes two straight sides 42 and 44 extending between a rounded first end 46 and a rounded second end 48. As shown in FIG. 5, the mold-side or bottom of the safety strap 20 includes an interior shoulder extending into the central opening 30. The spacing between circumferential shoulder 32 allows for the threaded shank of the bolt 28 to pass into a threaded opening of the mold half, but not the bolt head. The bolt heads thus clamp the shoulder 32 and the safety strap 20 to the mold halves. Any suitable bolt and shoulder configuration is available for this invention, depending on need.

The safety strap 20 includes a breaking point 50. As illustrated, the breaking point 50 is formed by aligned frangible sections 52 in each of the sides 42 and 44. The frangible sections 52 are formed by a recess 54 extending inward from an outer surface of the sides 42 and 44. The size of the recesses 54, and the overall breaking point 50, is determined based upon various factors, such as material type and a desired breaking strain value. For example, for smaller molds (e.g., for unit dies and 8x8 or smaller) a 0.88 inch breaking point material width may suffice to provide a breaking strain value of 1,000 lbs. A 1.50 inch breaking point material width may provide up to 1,000 lbs. breaking strain, and a 2.00 inch breaking point material width may provide up to 3,000 lbs. breaking strain.

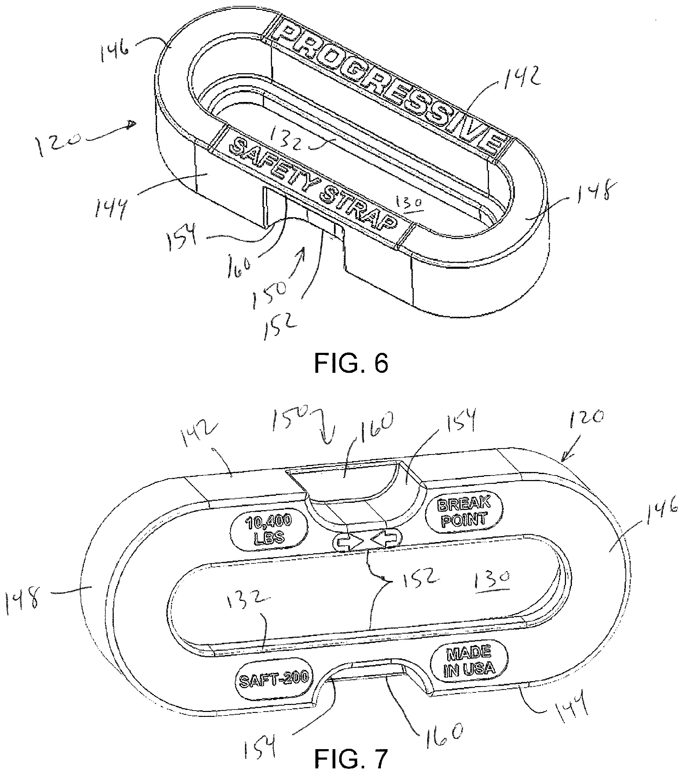

FIGS. 6 and 7 show a safety strap 120 according to one embodiment of this invention. The safety strap 120 includes an oval or stadium shaped strap body 140 surrounding the similarly shaped central opening 130. The strap body 140 includes two straight sides 142 and 144 extending between a rounded first end 146 and a rounded second end 148. The safety strap 120 includes a break point 150. As illustrated, the break point 150 is formed by aligned frangible sections 152 in each of the sides 142 and 144. The frangible sections 152 are formed by a recess 154 extending inward from an outer surface of the sides 142 and 144.

As illustrated, the recess 154 of each of the sides 142 and 144 does not extend all the way from the back (mold-side) to the front. This provides an optional material bridge 160 across the break point 150 on the front side of the safety strap 20. As illustrated, the two material bridges 160 allow for branding and/or other product information to be applied to the sides 140 and 142.

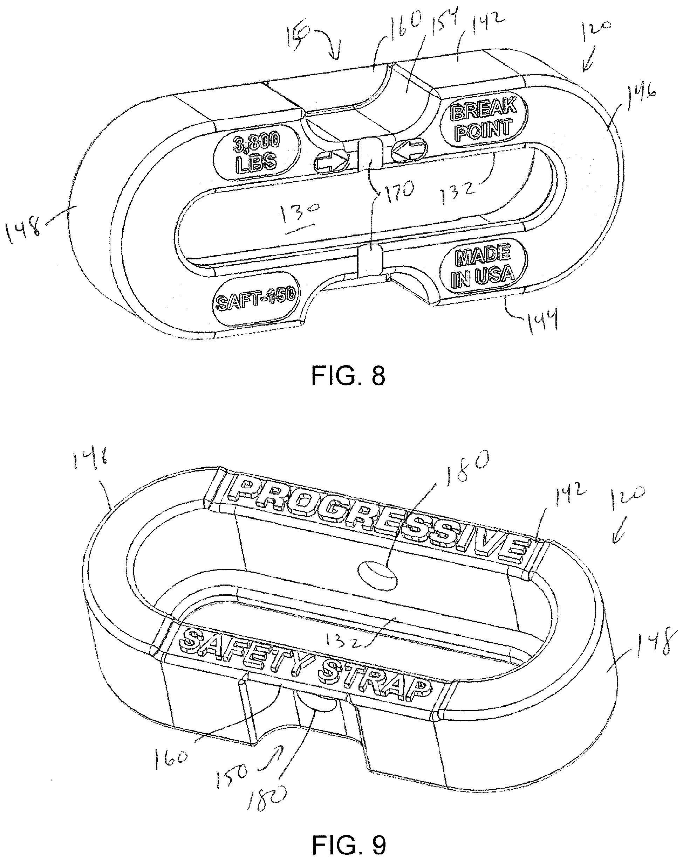

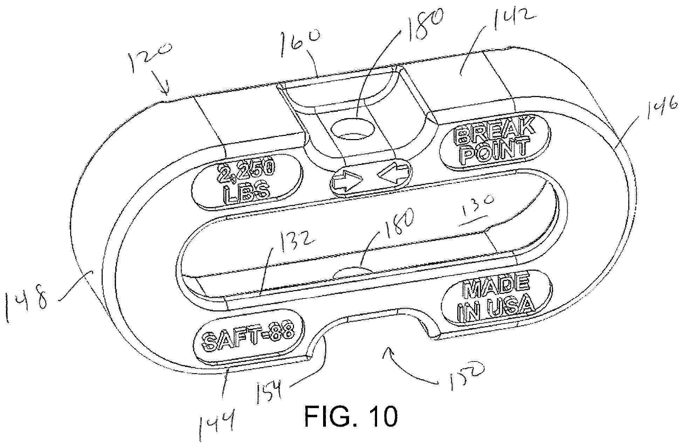

FIGS. 8-10 show optional additional and/or alternative modifications to the breaking point 150. In FIG. 8, and additional recess 170 is cut from the mold-side surface into the frangible section 152, thereby allowing for further material reduction or adjustment in the break point 150 to obtain the desired total material thickness and breaking strain value for the break point 150. FIGS 9 and 10 include an opening 180 for a similar purpose.

Various sizes, shapes, and configurations are available for the safety straps and the individual components described herein, depending on need and materials used. As an example, a 'figure eight' or 'dumbbell' shape can be used, thereby providing two circular ends for the bolts and a single, frangible material bridge extending between the two circular ends and across the parting line. A key to these designs will be having a material bridge thin enough to, and intended to, break at the desired strain force. Various recess shapes and configurations can also be used, such as one or more longitudinal or lateral grooves in one or more surfaces, a tiered recess (i.e., a recess in the recess), or a plurality of partial or full openings. The position of the recess structure(s) can also vary, such as at or closer to one or both of the ends.

Thus, the invention provides a mold safety strap that secures the mold halves together when needed, and breaks apart (in half) when accidentally left on the mold during use, and before the attachment bolts shear off the mold halves. The invention provides the benefits of metal mold straps while breaking under force similar to plastic straps.

The invention illustratively disclosed herein suitably may be practiced in the absence of any element, part, step, component, or ingredient which is not specifically disclosed herein.

While in the foregoing detailed description this invention has been described in relation to certain preferred embodiments thereof, and many details have been set forth for purposes of illustration, it will be apparent to those skilled in the art that the invention is susceptible to additional embodiments and that certain of the details described herein can be varied considerably without departing from the basic principles of the invention.

## Claims

1. A mold strap for securing two mold halves together, the mold strap comprising: a strap body having a first end connectable to a first of the mold halves and a second end connectable to a second of the mold halves, the strap body including a frangible section disposed between the first end and the second end.

2. The mold strap of Claim 1, further comprising two fasteners, each at one of the first and second ends of the strap body, wherein the frangible section has a break point value of less than the fasteners.

3. The mold strap of Claim 2, wherein the two fasteners are threaded bolts.

4. The mold strap of Claim 3, wherein each of the first end and the second end of the strap body includes a shoulder for receiving a fastener head.

5. The mold strap of any of the preceding claims, wherein the frangible section comprises a thickness of less than a remainder of the strap body.

6. The mold strap of any of the preceding claims, wherein the frangible section comprises a recess in a portion of the strap body extending between the first and second ends.

7. The mold strap of any of the preceding claims, wherein the strap body has an oval or stadium shape.

8. The mold strap of any of the preceding claims, wherein the strap body comprises two opposing sides extending between the first and second end, and each of the sides includes the frangible section.

9. The mold strap of Claim 8, wherein the frangible section comprises a recess in the sides.

10. The mold strap of Claim 9, wherein the recess extends from a first side surface and further comprising a second recess or an opening in a second side surface.

11. The mold strap of any of the preceding claims, comprising:
an elongated strap body including two side walls extending between the first end and the second end, and an elongated central opening disposed between the two side walls; and
a break point formed in a least one of the two side walls, wherein the break point is frangible at a predetermined breaking strain value.

12. The mold strap of Claim 11, further comprising two fasteners, each for one of the first and second ends of the strap body, wherein the predetermined breaking strain value is less than a fastener breaking strain value.

13. The mold strap of Claim 12, wherein the elongated central opening comprises a shoulder extending inward from the strap body and configured to receive a head of the fastener.

14. The mold strap of any of Claims 11 to 13, wherein the break point comprises a section of reduced material thickness, preferably a recess in each of the two side walls.

15. The mold strap of Claim 14, wherein the break point comprises a second recess in or adjacent to the recess or an opening in the recess of each of the two side walls.
